# EUROPEAN PATENT APPLICATION

(11) **EP 3 236 665 A1**
(43) Date of publication of application: **25.10.2017**
(21) Application number: 16190188.9
(22) Date of filing: 22.09.2016
(51) Int. Cl.: H04N 21/478, H04N 21/4788, H04N 21/431, A63F 13/352

(54) **METHOD AND APPARATUS FOR PERFORMING LIVE BROADCAST OF A GAME**

(30) Priority: 22.04.2016 CN 201610258365
(71) Applicant: Beijing Xiaomi Mobile Software Co., Ltd., Beijing 100085 (CN)
(72) Inventor: SHANG, Jin, Beijing, 100085 (CN); SUN, Heng, Beijing, 100085 (CN); LI, Zhigang, Beijing, 100085 (CN); ZHANG, Youzhi, Beijing, 100085 (CN)
(74) Representative: dompatent von Kreisler Selting Werner - Partnerschaft von Patent- und Rechtsanwälten mbB

(57) **Abstract**

The present disclosure provides a method and an apparatus for performing a live broadcast on a game, applied in a mobile terminal, which are applied in a mobile terminal. The method includes: collecting a game image and anchor audio information; synthesizing the game image and the anchor audio information to acquire a game commentary video; sending the game commentary video to other mobile terminals. The embodiment of the present disclosure, by synthesizing the game image collected and the anchor audio information collected to acquire the game commentary video, and by sending the game commentary video the other mobile terminals, may realize the game live broadcast via the mobile terminal and may offer convenience for a user to perform and watch the game live broadcast whenever and wherever possible.

## Description

### TECHNICAL FIELD

The present disclosure generally relates to the field of video live broadcasting technology, and more particularly, to a method and an apparatus for performing a live broadcast on a game.

### BACKGROUND

A video live broadcast refers to performing a live broadcast utilizing Internet and Steaming Media technology. The video, owing to a integration of images, text, sounds and various elements, is full of sounds and images, and has an excellent expressing effect so as to gradually become a main Internet expression way.

A game live broadcast is one application scene of the video live broadcast. The game live broadcast via a mobile phone refers to share a game scene running in the mobile phone with a plurality of audiences. How to realize a game live broadcast via the mobile phone is one of technology problems needing to be resolved urgently.

### SUMMARY

According to a first aspect of embodiments of the present disclosure, there is provided a method for performing a live broadcast on a game. The method is applied in a mobile terminal and includes:
collecting a game image and anchor audio information;
synthesizing the game image and the anchor audio information, to acquire a game commentary video; and
sending the game commentary video to other mobile terminals.

In an embodiment, before sending the game commentary video to other mobile terminals, the method further includes:
collecting additional video information, in which the additional video information includes at least one of game audio information and an anchor video image; and
synthesizing the additional video information, the game image and the anchor audio information, to acquire the game commentary video.

In an embodiment, if the game image and the anchor video image are collected, synthesizing the game image and the anchor video image includes:
acquiring a predetermined relative position between the anchor video image and the game image; and
superimposing the anchor video image onto the game image according to the predetermined relative position.

In an embodiment, after superimposing the anchor video image onto the game image according to the predetermined relative position, the method further includes:
acquiring a move instruction of the anchor video image, in which the move instruction of the anchor video image carries a move trajectory of the anchor video image; and
moving the anchor video image according to the move trajectory.

In an embodiment, before acquiring the predetermined relative position between the anchor video image and the game image, the method further includes:
zooming the anchor video image.

In an embodiment, before acquiring the predetermined relative position between the anchor video image and the game image, the method further includes:
recording a coordinate of an opened game interface and a coordinate of an opened anchor video interface on a current mobile terminal screen; and
determining the predetermined relative position between the anchor video image and the game image according to the coordinates recorded, and storing the predetermined relative position.

According to a second aspect of embodiments of the present disclosure, there is provided an apparatus for performing a live broadcast on a game. The apparatus is applied in a mobile terminal, and includes:
a first collecting module, configured to collect a game image and anchor audio information;
a synthesizing module, configured to synthesize the game image and the anchor audio information collected by the first collecting module, to acquire a game commentary video; and
a sending module, configured to send the game commentary video acquired by the synthesizing module to other mobile terminals.

In an embodiment, the apparatus further includes:
a second collecting module, configured to collect additional video information before the sending module sends the game commentary video to other mobile terminals, in which the additional video information includes be at least one of game audio information and an anchor video image; and
the synthesizing module is further configured to synthesize the additional video information collected by the second collecting module, and the game image and the anchor audio information collected by the first collecting module, to acquire the game commentary video.

In an embodiment, if the game image and the anchor video image are collected, the synthesizing module includes:
an acquiring sub-module, configured to acquire a predetermined relative position between the anchor video image and the game image; and
a superimposing sub-module, configured to superimpose the anchor video image onto the game image according to the predetermined relative position acquired by the acquiring sub-module.

In an embodiment, the apparatus further includes:
an acquiring module, configured to acquire a move instruction of the anchor video image after the superimposing sub-module superimposes the anchor video image onto the game image according to the predetermined relative position, in which the move instruction of the anchor video image carries a move trajectory of the anchor video image; and
a moving module, configured to move the anchor video image according to the move trajectory carried by the move instruction acquired by the acquiring module.

In an embodiment, the apparatus further includes:
a zooming module, configured to zoom the anchor video image, before the acquiring sub-module acquires the predetermined relative position between the anchor video image and the game image.

In an embodiment, the apparatus further includes:
a recording module, configured to record a coordinate of an opened game interface and a coordinate of an opened anchor video interface on a current mobile terminal screen, before the acquiring sub-module acquires the predetermined relative position between the anchor video image and the game image; and
a determining and storing module, configured to determine the predetermined relative position between the anchor video image and the game image according to the coordinates recorded by the recording module, and to store the predetermined relative position.

According to a third aspect of embodiments of the present disclosure, there is provided a device for performing a live broadcast live on a game, comprising:
a processor; and
a memory configured to store an instruction executable by the processor;
in which the processor is configured to perform the method for performing a live broadcast live on a game according to the first aspect of embodiments of the present disclosure.

According to a fourth aspect of embodiments of the present disclosure, a computer-readable storage medium is provided. The computer-readable storage medium has stored therein instructions that, when executed by a processor of a device, causes the device to perform the method for performing a live broadcast live on a game according to the first aspect of embodiments of the present disclosure.

The technology solutions provided in embodiments of the present disclosure may include following advantageous effects.

The collected game image and the collected anchor video information are synthesized to acquire the game commentary video, and the game commentary video is sent to other mobile terminals, thereby realizing a game live broadcast via the mobile terminal and offering convenience for a user to perform and watch the game live broadcast whenever and wherever possible.

The collected game images, the collected anchor audio information and the collected additional video information are synthesized to acquire the game commentary video, and the game commentary video is sent to other mobile terminals, not only realizing the game live broadcast via the mobile terminal, but also enriching content and form of the live broadcast, thereby improving the user experience of the game live broadcast.

The predetermined relative position between the anchor video image and the game image is acquired, and the anchor video image is superimposed onto the game image according to the predetermined relative position, thereby making a realization manner easy.

The anchor video image is moved, thereby avoiding masking a region needing to be shown.

The collected anchor video image is zoomed to adjust the anchor video image to a fit size, thereby offering a condition for synthesizing the anchor video image and the game image.

The predetermined relative position between the anchor video image and the game image is determined according to the recorded coordinates, and the predetermined position is stored, thereby offering a condition for subsequently acquiring the predetermined relative position and superimposing images according to the predetermined relative position.

It is to be understood that, both the foregoing general description and the following detailed description are exemplary and explanatory only and are not restrictive of the present disclosure.

### BRIEF DESCRIPTION OF THE DRAWINGS

The accompanying drawings herein are incorporated in and become parts of the specification, illustrate embodiments consistent with the disclosure and, together with the description, serve to explain the principles of the disclosure.
Fig. 1 is a flow chart showing a method for performing a live broadcast on a game according to an exemplary embodiment of the present disclosure;
Fig. 2 is a flow chart showing another method for performing a live broadcast on a game according to an exemplary embodiment of the present disclosure;
Fig. 3A is a schematic diagram illustrating a superimposition between a game image and an anchor video image according to an exemplary embodiment of the present disclosure;
Fig. 3B is a schematic diagram illustrating another superimposition between a game image and an anchor video image according to an exemplary embodiment of the present disclosure;
Fig. 4 is a flow chart showing another method for performing a live broadcast on a game according to an exemplary embodiment of the present disclosure;
Fig. 5 is a flow chart showing another method for performing a live broadcast on a game according to an exemplary embodiment of the present disclosure;
Fig. 6 is a block diagram of an apparatus for performing a live broadcast on a game according to an exemplary embodiment of the present disclosure;
Fig. 7 is a block diagram of another apparatus for performing a live broadcast on a game according to an exemplary embodiment of the present disclosure;
Fig. 8 is a block diagram of another apparatus for performing a live broadcast on a game according to an exemplary embodiment of the present disclosure;
Fig. 9 is a block diagram of another apparatus for performing a live broadcast on a game according to an exemplary embodiment of the present disclosure;
Fig. 10 is a block diagram of another apparatus for performing a live broadcast on a game according to an exemplary embodiment of the present disclosure;
Fig. 11 is a block diagram of another apparatus for performing a live broadcast on a game according to an exemplary embodiment of the present disclosure;
Fig. 12 is a block diagram of a device which is applied for performing a live broadcast on a game according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

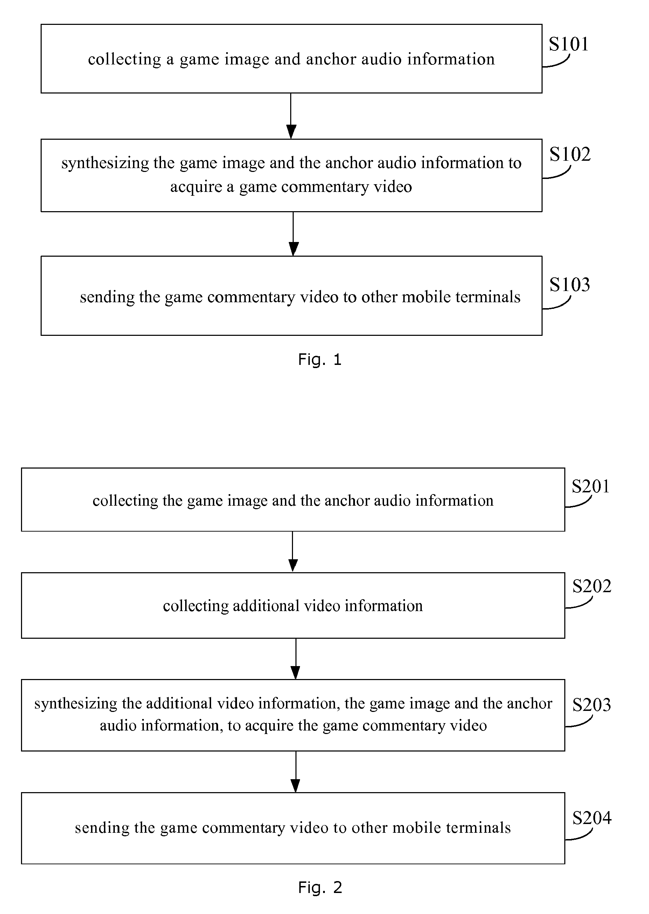

Fig. 1 is a flow char of a method for performing a live broadcast on a game according to an exemplary embodiment of the present disclosure. As shown in Fig. 1, the method for performing a live broadcast on a game is applied in a mobile terminal. The mobile terminal may include, but is not limited to, a mobile phone. The method for performing a live broadcast on a game includes the following steps S101-S103.

In step S101, a game image and anchor audio information is collected.

In the embodiment, a current mobile terminal may collect the game image in an opened game interface according to a predetermined image size and may collect the anchor audio information.

In step S102, the game image collected and the anchor audio information collected is synthesized to acquire a game commentary video.

In the embodiment, the game image and the anchor audio information may be synthesized via an audio and video synthesis software in the mobile phone to acquire the game commentary video.

In step S103, the game commentary video is sent to other mobile terminals.

In the embodiment, the game commentary video may be sent to a server via Internet, and then the server may send the game commentary video to other mobile terminals. Therefore, the other mobile terminals may share the game in the live broadcast in the current mobile terminal.

The method embodiment for performing a live broadcast on a game, by synthesizing the game image collected and the anchor audio information collected to acquire the game commentary video, and by sending the game commentary video the other mobile terminals, may realize the game live broadcast via the mobile terminal and may offer convenience for a user to perform and watch the game live broadcast whenever and wherever possible.

Fig. 2 is a flow chart showing another method for performing a live broadcast on a game according to an exemplary embodiment of the present disclosure. As shown in Fig. 2, the method for performing a live broadcast on a game includes the followings.

In step S201, the game image and the anchor audio information is collected.

In step S202, additional video information is collected.

The additional video information may include at least one of game audio information and an anchor video image.

If the additional video information includes the anchor video image, the current mobile terminal may collect the game image in an opened game interface and the anchor video image in an anchor video interface according to a same or different predetermined image size.

In step S203, the additional video information collected, the game image and the anchor audio information may be synthesized to acquire the game commentary video.

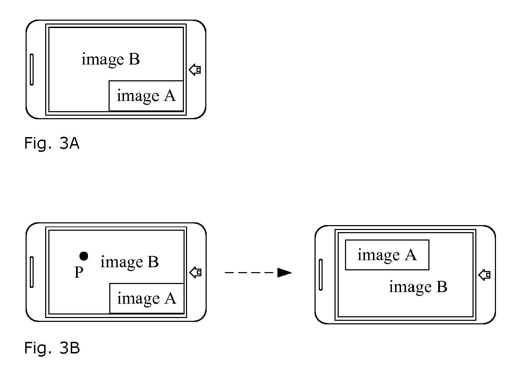

In the embodiment, if the additional video information includes the anchor video information, the process of synthesizing the game image and the anchor video information may include: acquiring a predetermined relative position between the anchor video image and the game image, and superimposing the anchor video image onto the game image according to the predetermined relative position. It is assumed that the anchor video image A is located on lower right of the game image B, a superimposed image is shown in Fig. 3A.

In addition, the superimposition of the images may be performed according to a position where the anchor drags the anchor video image. As a result, the image may be adjusted according to interest and concern of the user. It is assumed that, as shown in Fig. 3B, the anchor drags the anchor video image A to a point B, and the anchor video image may be superimposed onto the point B.

In the embodiment, the synthesized image may be encoded via an encoder, after the game image and the anchor video image are synthesized, thereby significantly decreasing system power consumption of the mobile terminal and temperature of the mobile terminal, and promising synchronization between the anchor video image and the game image at the same time.

In step S204, the game commentary video is sent to other mobile terminals.

The method embodiment for performing a live broadcast on a game, by synthesizing the game image and the anchor audio information collected, and the additional video information as well, to acquire the game commentary video, and by sending the game commentary video to other mobile terminals, may not only realize the game live broadcast via the mobile terminal, but also enrich content and form of the live broadcast, thereby improving the user experience of the game live broadcast.

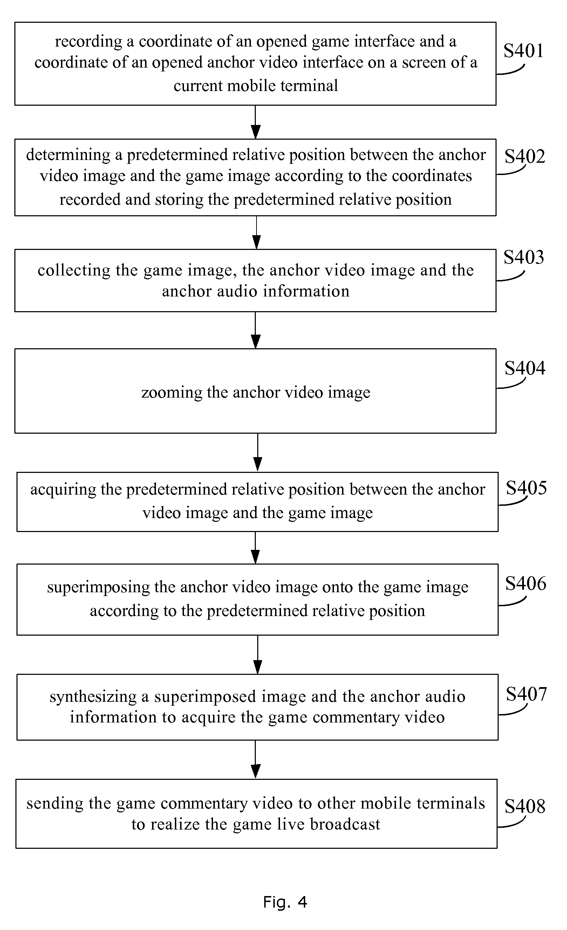

Fig. 4 is a flow chart showing another method for performing a live broadcast on a game according to an exemplary embodiment of the present disclosure. As shown in Fig. 4, the method includes followings.

In step S401, a coordinate of an opened game interface and a coordinate of an opened anchor video interface on a current mobile terminal screen are recorded.

If the anchor performs the live broadcast on the game via a current mobile phone, a game software and a live broadcast software may be opened in the mobile phone and each has a respective coordinate with respect to a mobile phone screen respectively.

In step S402, a predetermined relative position between the anchor video image and the game image is determined according to the coordinates recorded and is stored.

In the embodiment, the mobile phone may determine the predetermined relative position between the game interface and the anchor video interface according to the coordinates of the game interface and the anchor video interface with respect to the mobile phone screen.

In step S403, the game image, the anchor video image and the anchor audio information is collected.

In the embodiment, the game image, the anchor video image and the anchor audio information may be collected after the game software and the live broadcast software are opened in the mobile phone.

In step S404, the anchor video image collected may be zoomed.

The step S404 is an optional step, which may be not performed if the size of the anchor video image collected is fitted.

If for acquiring a smaller anchor video image, the anchor video image collected may be zoomed out.

If for acquiring a bigger anchor video image, the anchor video image collected may be zoomed in.

In step S405, the predetermined relative position between the anchor video image and the game image is acquired.

The predetermined relative position may be acquired by reading the stored predetermined relative position between the anchor video image and the game image.

In step S406, the anchor video image is superimposed onto the game image according to the predetermined position acquired.

For example, if the anchor video image is located on the upper left of the game image, the anchor video image may be superimposed on the upper left of the game image.

For another example, if the anchor video image on located on the lower left of the game image, the anchor video image may be superimposed on the lower left of the game image.

In step S407, a superimposed image and the anchor audio information is synthesized to acquire the game commentary video.

In step S408, the server sends the game commentary video to other mobile terminals, so as to realize the game live broadcast.

The method embodiment for performing a live broadcast on a game, by acquiring the predetermined relative position between the anchor video image collected and the game image collected, and by superimposing the anchor video image onto the game image according to the predetermined relative position, may make a realization manner easy.

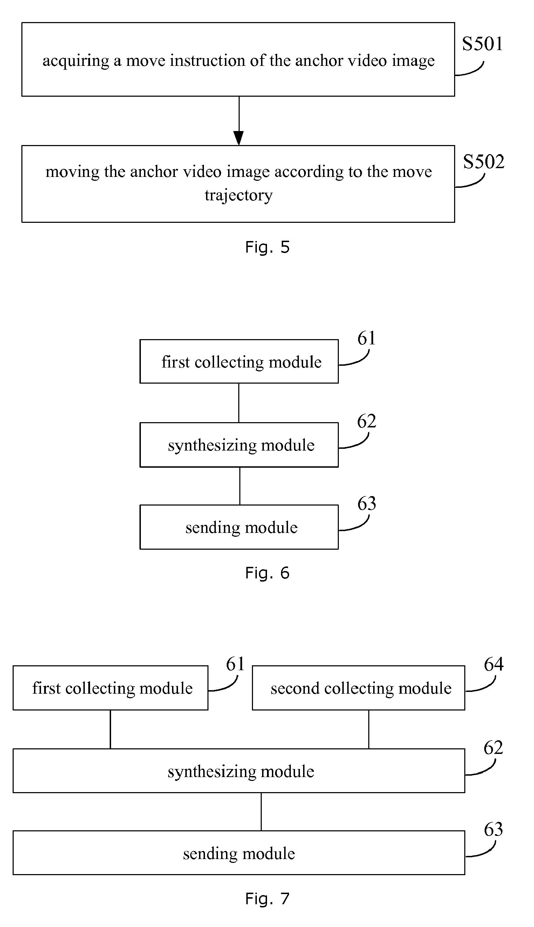

Fig. 5 is a flow chart showing another method for performing a live broadcast on a game according to an exemplary embodiment of the present disclosure. As shown in Fig. 5, after the step S406, the method further includes followings.

In step S501, a move instruction of the anchor video image is acquired.

The move instruction of the anchor video image may carry a move trajectory of the anchor video image.

In step S502, the anchor video image is moved according to the move trajectory.

In the embodiment, in order to show a certain region in a game screen, if the region is masked by the anchor video image, the anchor may drag the anchor video image to another position to avoid masking the region needing to be shown.

The method embodiment for performing a live broadcast on a game, by superimposed the anchor video image onto a dragged position, may avoid masking the region needing to be shown.

Corresponding to the foregoing method embodiment for performing a live broadcast on a game, an apparatus embodiment for performing a live broadcast on a game of the present disclosure is provided.

Fig. 6 is a block diagram of an apparatus for performing a live broadcast on a game according to an exemplary embodiment of the present disclosure. As shown in Fig. 6, the apparatus is applied in a mobile terminal, and includes a first collecting module 61, a synthesizing module 62 and a sending module 63.

The first collecting module 61 is configured to collect a game image and anchor audio information.

In the embodiment, a current mobile terminal may collect the game image in an opened game interface according to a predetermined image size and may collect the anchor audio information.

The synthesizing module 62 is configured to synthesize the game image and the anchor audio information collected by the first collecting module 61 to acquire a game commentary video.

In the embodiment, the game image and the anchor audio information may be synthesized via an audio and video synthesis software so as to acquire the game commentary video.

The sending module 63 is configured to send the game commentary video acquired by the synthesizing module 62 to other mobile terminals.

In the embodiment, the game commentary video may be sent to a server via Internet, and then the server may send the game commentary video to other mobile terminals. Therefore, the other mobile terminals may share the game in the live broadcast in the current mobile terminal.

The apparatus shown in Fig. 6 is configured for realizing the flow chart shown in Fig. 1 showing the method, with the same relevant content illustration related to the method, which will not be elaborated herein.

The apparatus embodiment for performing a live broadcast on a game, by synthesizing the game image collected and the anchor audio information collected to acquire the game commentary video, and by sending the game commentary video to other motile terminals, may realize the game live broadcast via the mobile terminal and may offer convenience for a user to perform and watch the game live broadcast whenever and wherever possible;

Fig. 7 is a block diagram of another apparatus for performing a live broadcast on a game according to an exemplary embodiment of the present disclosure. As shown in Fig. 7, on the basis of the embodiment shown in Fig. 6, the apparatus further includes a second collecting module 64.

The second collecting module 64 is configured to collect additional video information before the game commentary video is sent to other mobile terminals by the sending module 63. The additional video information may include at least one of game audio information and an anchor video image.

If the additional video information includes the anchor video image, the current mobile terminal may collect the game image in an opened game interface and the anchor video image in an anchor video interface according to a same or different predetermined image size.

The synthesizing module 62 is further configured to synthesize the additional video information collected by the second collecting module 64, and the game image and the anchor audio information collected by the first collecting module 61 as well, to acquire the game commentary video.

In the embodiment, if the additional video information includes the anchor video information, the process of synthesizing the game image and the anchor video information may include: acquiring a predetermined relative position between the anchor video image and the game image, and superimposing the anchor video image onto the game image according to the predetermined relative position. It is assumed that the anchor video image A is located on lower right of the game image B, a superimposed image is shown in Fig. 3A.

In addition, the superimposition of the images may be performed according to a position where the anchor drags the anchor video image. As a result, the image may be adjusted according to interest and concern of the user. It is assumed that, as shown in Fig. 3B, the anchor drags the anchor video image A to a point B, and the anchor video image may be superimposed onto the point B.

In the embodiment, the synthesized image may be encoded via an encoder, after the game image and the anchor video image are synthesized, thereby significantly decreasing system power consumption of the mobile terminal and temperature of the mobile terminal and promising synchronization between the anchor video image and the game image at the same time.

The apparatus shown in Fig. 7 is configured for realizing the flow chart shown in Fig. 2 showing the method, with the same relevant content illustration related to the method, which will not be elaborated herein.

The apparatus embodiment for performing a live broadcast on a game, by synthesizing the game image and the anchor audio information collected and the additional video information as well, to acquire the game commentary video, and by sending the game commentary video to other mobile terminals, may not only realize to perform the game live broadcast via the mobile terminal, but also enrich content and form of the live broadcast, thereby improving the user experience of the game live broadcast.

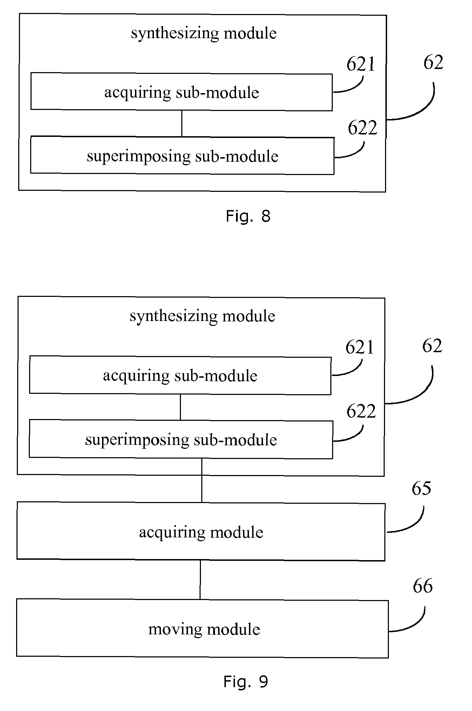

Fig. 8 is a block diagram of another apparatus for performing a live broadcast on a game according to an exemplary embodiment of the present disclosure. As shown in Fig. 8, on the basis of the embodiment shown in Fig. 7, if the game image and the anchor video information are collected, the synthesizing module 62 may include an acquiring sub-module 621 and a superimposing sub-module 622.

The acquiring sub-module 621 is configured to acquire the predetermined relative position between the anchor video image and the game image.

The predetermined relative position may be acquired by reading the stored predetermined relative position between the anchor video image and the game image.

The superimposing sub-module 622 is configured to superimpose the anchor video image onto the game image according to the predetermined relative position acquired by the acquiring sub-module 621.

For example, if the anchor video image is located on the upper left of the game image, the anchor video image may be superimposed on the upper left of the game image.

For another example, if the anchor video image is located on the lower left of the game image, the anchor video image may be superimposed on the lower left of the game image.

The apparatus shown in Fig. 8 is configured for realizing the flow chart shown in Fig. 4 showing the method, with the same relevant content illustration related to the method, which will not be elaborated herein.

The apparatus embodiment for performing a live broadcast on a game, by acquiring the predetermined relative position between the anchor video image collected and the game image collected, and by superimposing the anchor video image onto the game image according to the predetermined relative position, may make a realization manner easy.

Fig. 9 is a block diagram of another apparatus for performing a live broadcast on a game according to an exemplary embodiment of the present disclosure. As shown in Fig. 9, on the basis of the embodiment shown in Fig. 8, the apparatus further includes an acquiring module 65 and a moving module 66.

The acquiring module 65 is configured to acquire a move instruction of the anchor video image after the superimposing sub-module 622 superimposes the anchor video information onto the game image according to the predetermined relative position. The move instruction of the anchor video image may carry a move trajectory of the anchor video image.

The moving module 66 is configured to move the anchor video image according to the move trajectory carried by the move instruction acquired by the acquiring module 65.

In the embodiment, in order to show a certain region in a game screen, if the region is masked by the anchor video image, the anchor may drag the anchor video image to another position to avoid masking the region needing to be shown.

The apparatus shown in Fig. 9 is configured for realizing the flow chart shown in Fig. 5 showing the method, with the same relevant content illustration related to the method, which will not be elaborated herein.

The apparatus embodiment for performing a live broadcast on a game, by superimposing the anchor video image onto a dragged position, may avoid masking the region needing to be shown.

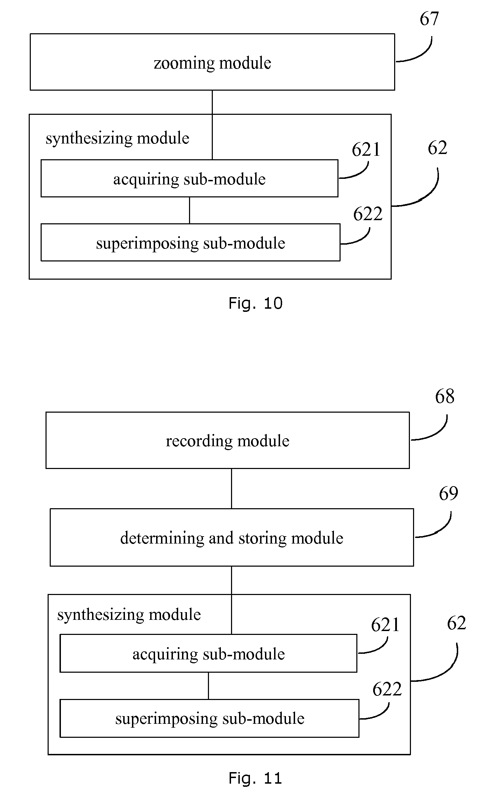

Fig. 10 is a block diagram of another apparatus for performing a live broadcast on a game according to an exemplary embodiment of the present disclosure. As shown in Fig. 10, on the basis of the embodiments shown in Fig.8, the apparatus further includes: a zooming module 67.

The zooming module 67 is configured to zoom the anchor video image before the acquiring sub-module 621 acquires the predetermined relative position between the anchor video image and the game image.

If for acquiring a smaller anchor video image, the anchor video image collected may be zoomed out.

If for acquiring a bigger anchor video image, the anchor video image collected may be zoomed in.

The apparatus shown in Fig. 10 is configured for realizing the flow chart shown in Fig. 4 showing the method, with the same relevant content illustration related to the method, which will not be elaborated herein.

The apparatus embodiment for performing a live broadcast on a game, by zooming the anchor video information collected to adjust the anchor video image to a fit size, may offer a condition for subsequently acquiring the predetermined relative position and superimposing images.

Fig. 11 is a block diagram of another apparatus for performing a live broadcast on a game according to an exemplary embodiment of the present disclosure. As shown in Fig. 11, on the basis of the embodiments shown in Fig. 8, the apparatus further includes: a recording module 68 and a determining and storing module 69.

The recording module 68 is configured to record a coordinate of an opened interface and a coordinate of an opened anchor video interface on a current mobile terminal screen, before the acquiring sub-module 621 acquires the predetermined relative position between the anchor video image and the game image.

If the anchor performs the live broadcast on the game via a current mobile phone, a game software and a live broadcast software may be opened in the mobile phone and each has a respective coordinate with respect to a mobile phone screen respectively.

The determining and storing module 69 is configured to determine the predetermined relative position between the anchor video image and the game image recorded by the recording module 68 and to store the predetermined relative position.

In the embodiment, the mobile phone may determine the predetermined relative position between the game interface and the anchor video interface according to the coordinates of the game interface and the anchor video interface with respect to the mobile phone screen.

The apparatus shown in Fig. 11 is configured for realizing the flow chart shown in Fig. 4 showing the method, with the same relevant content illustration related to the method, which will not be elaborated herein.

The apparatus embodiment for performing a live broadcast on a game, by determining the predetermined relative position between the anchor video image and the game image according to the coordinates recorded, and by storing the predetermined position, therefore, may offer a condition for subsequently acquiring the predetermined relative position and superimposing images according to the predetermined relative position.

With respect to the apparatuses in the above embodiments, the specific manners for performing operations for individual modules therein have been described in detail in the embodiments regarding the methods, which are not elaborated herein again.

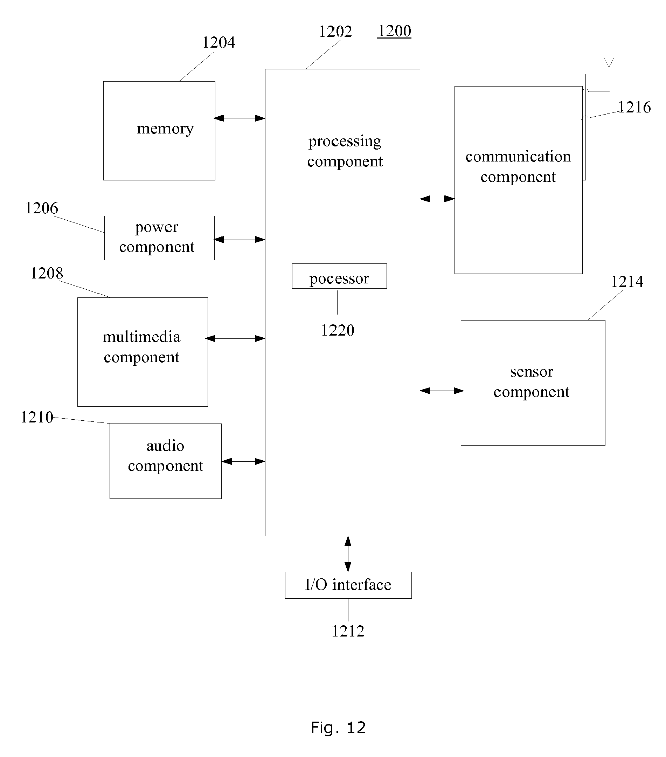

Fig. 12 is a block diagram of an apparatus which is applied for performing a live broadcast on a game according to an exemplary embodiment of the present disclosure. For example, a device 1200 may be a mobile phone, a computer, a digital broadcasting terminal, a messaging terminal, a game console, a tablet device, a medical device, fitness equipment, a Personal Digital Assistant PDA, an aircraft, and the like.

Referring to Fig. 12, the device 1200 may include the following one or more components: a processing component 1202, a memory 1204, a power component 1206, a multimedia component 1208, an audio component 1210, an Input/Output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For example, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 1208 includes a front camera and/or a rear camera. The front camera and/or the rear camera may receive external multimedia data while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone (MIC) configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface for the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For example, the sensor component 1214 may detect an open/closed status of the device 1200 and relative positioning of components (e.g. the display and the keypad of the device 1200). The sensor component 1214 may also detect a change in position of the device 1200 or of a component in the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate wired or wireless communication between the device 1200 and other devices. The device 1200 can access a wireless network based on a communication standard, such as WIFI, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 1204 including instructions. The above instructions are executable by the processor 1220 in the device 1200, for performing the above described methods. For example, the non-transitory computer-readable storage medium may be a ROM, a RAM, a CD-ROM, a magnetic tape, a floppy disc, an optical data storage device, and the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A method for performing a live broadcast on a game, applied in a mobile terminal, and comprising:
collecting (S101) a game image and anchor audio information;
synthesizing (S102) the game image and the anchor audio information to acquire a game commentary video;
sending (S103) the game commentary video to other mobile terminals.

2. The method according to claim 1, before sending (S103) the game commentary video to other mobile terminals, further comprising:
collecting (S202) additional video information, wherein the additional video information comprises at least one of game audio information and an anchor video image; and
synthesizing (S203) the additional video information, the game image and the anchor audio information, to acquire the game commentary video.

3. The method according to claim 2, wherein if the game image and the anchor video image are collected, synthesizing the game image and the anchor video image comprises:
acquiring (S405) a predetermined relative position between the anchor video image and the game image; and
superimposing (S406) the anchor video image onto the game image according to the predetermined relative position.

4. The method according to claim 3, after superimposing (S406) the anchor video image onto the game image according to the predetermined relative position, further comprising:
acquiring (S501) a move instruction of the anchor video image, wherein the move instruction of the anchor video image carries a move trajectory of the anchor video image; and
moving (S502) the anchor video image according to the move trajectory.

5. The method according to claim 3 or 4, before acquiring (S405) the predetermined relative position between the anchor video image and the game image, further comprising:
zooming (S404) the anchor video image.

6. The method according to any one of claims 3-5, before acquiring (S405) the predetermined relative position between the anchor video image and the game image, further comprising:
recording (S401) a coordinate of an opened game interface and a coordinate of an opened anchor video interface on a current mobile terminal screen; and
determining (S402) the predetermined relative position between the anchor video image and the game image according to the coordinates recorded, and storing the predetermined relative position.

7. An apparatus for performing a live broadcast on a game, applied in a mobile terminal, and comprising:
a first collecting module (61), configured to collect a game image and anchor audio information;
a synthesizing module (62), configured to synthesize the game image and the anchor audio information collected by the first collecting module (61) to acquire a game commentary video; and
a sending module (63), configured to send the game commentary video acquired by the synthesizing module (62) to other mobile terminals.

8. The apparatus according to claim 7, further comprising:
a second collecting module (64), configured to collect additional video information, before the sending module (63) sends the game commentary video to other mobile terminals, wherein the additional video information comprises at least one of game audio information and an anchor video image;
the synthesizing module (62) is further configured to synthesize the additional video information collected by the second collecting module (64), and the game image and the anchor audio information collected by the first collecting module (61), to acquire the game commentary video.

9. The apparatus according to claim 8, wherein if the game image and the anchor video image are collected, the synthesizing module (62) comprises:
an acquiring sub-module (621), configured to acquire a predetermined relative position between the anchor video image and the game image; and
a superimposing sub-module (622), configured to superimpose the anchor video image onto the game image according to the predetermined relative position acquired by the acquiring sub-module (621).

10. The apparatus according to claim 9, further comprising:
an acquiring module (65), configured to acquire a move instruction of the anchor video image after the superimposing sub-module (622) superimposes the anchor video image onto the game image according to the predetermined relative position, wherein the move instruction of the anchor video image carries a move trajectory of the anchor video image; and
a moving module (66), configured to move the anchor video image according to the move trajectory carried by the move instruction acquired by the acquiring module (65).

11. The apparatus according to claim 9 or 10, further comprising:
a zooming module (67), configured to zoom the anchor video image before the acquiring sub-module (621) acquires the predetermined relative position between the anchor video image and the game image.

12. The apparatus according to any one of claims 9-11, further comprising:
a recording module (68), configured to record a coordinate of an opened game interface and a coordinate of an opened anchor video interface on a current mobile terminal screen, before the acquiring sub-module (621) acquires the predetermined relative position between the anchor video image and the game image; and
a determining and storing module (69), configured to determine the predetermined relative position between the anchor video image and the game image according to the coordinates recorded by the recording module (68), and to store the predetermined relative position.

13. A device for performing a live broadcast on a game, comprising:
a processor; and
a memory configured to store an instruction executable by the processor;
wherein the processor is configured to perform the method for performing a live broadcast on a game according to any one of claims 1-6.

14. A computer-readable storage medium having stored therein instructions that, when executed by a processor of a device, causes the device to perform the method for performing a live broadcast on a game according to any one of claims 1-6.
